# EUROPEAN PATENT SPECIFICATION

(11) **EP 4 074 547 B1**
(45) Date of publication and mention of the grant of the patent: **31.01.2024**
(21) Application number: 22164056.8
(22) Date of filing: 24.03.2022
(51) Int. Cl.: B60R 1/06, B65D 55/02, E05B 35/00, E05C 19/06, F16B 21/07

(54) **FASTENING ARRANGEMENT, REARVIEW DEVICE AND VEHICLE**
BEFESTIGUNGSANORDNUNG, RÜCKBLICKVORRICHTUNG UND FAHRZEUG
AGENCEMENT DE FIXATION, DISPOSITIF DE RÉTROVISEUR ET VÉHICULE

(30) Priority: 01.04.2021 DE 102021108437
(43) Date of publication of application: 19.10.2022
(73) Proprietor: Motherson Innovations Company Limited, London EC2N 2AX (GB)
(72) Inventor: RAWDING, Stephen, Portchester, Hampshire (GB); MARKOWSKI, Grant, Portchester, Hampshire (GB)
(74) Representative: Weber-Bruls, Dorothée

(56) References cited:
- DE-A1- 10 327 180
- DE-U1- 9 415 686
- DE-U1- 29 700 793
- DE-U1-202015 006 889

## Description

### FIELD

The present disclosure relates to a vehicle rearview device with a fastening arrangement adapted for detachably attaching a cover of the vehicle rearview device according to the preamble of claim 1, and a vehicle with such a rearview device.

### BACKGROUND

The statements in this section merely provide background information related to the present disclosure and may not constitute prior art.

Almost all modem vehicles come equipped with an exterior rearview mirror. These exterior mirrors provide additional safety by allowing the driver to see areas to the side and behind the vehicle. Damage can occur to the outer cover of an exterior rearview vehicle mirror assembly in a variety of ways. Collision with an object such as another vehicle as a non-limiting example can damage the outer cover (also referred to as a scalp) allowing the ingress of containments into the rearview mirror assembly. The damage to the cover may also reduce the aerodynamics of the rearview vehicle mirror assembly leading to a decrease in fuel economy. The cover currently is replaceable by removing and replacing a number of fasteners. This method is time consuming to remove and replace and the fasteners may be lost or damaged. The use of fasteners for serviceability may also create packaging concerns to allow access and clearance for the fasteners.

Another method to secure a removable cover is discussed in US 6,511,189 B1 titled "Interchangeable mirror scalp for trailer towing" and issued on January 28, 2003. In this patent, an exchangeable portion of the scalp cover is attached to the mirror assemble using tangs or tabs that clip into a corresponding opening. This allows different parts to be secured in the same housing. Removal of this exchangeable portion is not convenient or easily accessible without disassembly of the mirror assembly. This design may also suffer from degradation of the tang strength during multiple scalp cover exchanges.

DE 103 27 180 A1 describes an exterior rear-view mirrors for vehicles, preferably for motor vehicles, with a mirror base and a mirror head which has a housing which is connected to a mirror carrier, wherein the mirror housing and the mirror carrier are held together by at least one latching device are connected to each other.

DE 297 00 793 U1 refers to a connection system of a first element with at least one second element, which can be connected by means of at least one snap element, characterized in that a snap-in projection of the snap-in element, which is arranged on one of the two elements, can be latched under pretension at least one pretensioning device on a latching element, which is arranged on the other element, the snap-in element is mounted pivotably about a support in such a way that an externally accessible actuating device is arranged, and the snap-in element can be released from the locking position on the locking element against the bias of the biasing device during the pivoting movement by applying a force to the actuating device, so that the connection of the two elements can be detached or separated non-destructively.

DE 941 56 86 U1 describes a detachable snap connection, wherein two connected joining partners are connected via an elastic snap arm arranged in the joining direction with a hook of a joining partner present at its end and a preferably right-angled hook and a hook directed opposite fixed locking undercut of the other joining partner can be released again in that a key disengages its hook from the locked position to the locking undercut by bending the snap arm.

DE 20 2015 006 889 U1 teaches a rearview mirror having a structure and a cover member attached to the structure, the structure including a locking claw protrudingly provided at an inward position relative to an edge portion of the structure, the cover member having a includes a locked portion protruding from an inner surface of the cover member provided at an inward position relative to an edge portion of the cover member, the locked portion being in locking engagement with the lock claw, and wherein the structure includes a protruding part protrudingly provided on a periphery of the locking claw, the protruding part preventing deformation of the locked part.

DE 41 30 176 A1 relates to an exterior mirror for vehicles which can be fastened to a receptacle on the body and which has a mirror housing in which a mirror glass can be fixed on a holding part, wherein the mirror housing after the holding part has been mounted on the vehicle can be slid over the holding part and releasably fixed in an end position.

DE 10 2008 053 177 A1 teaches a rearview mirror assembly for vehicles, comprising: an adjustment unit comprising a base attachable to the vehicle by means of a mounting unit and comprising a platform which is opposite to the base. at least one axis is pivotable; a mirror support plate having a front and a back side, the mirror support plate having a back side attached to the platform; a mirror panel fixed to the back of the mirror support plate; and a housing having an opening through which the base projects outward; wherein the housing is fixed to the mirror support plate.

US 2002/0130239 A1 describes a mirror device assembly for a vehicle, the mirror device assembly comprising a mirror and a mirror visor which covers a vehicle front side of the mirror for visual confirmation of a region substantially toward a rear of the vehicle; a frame disposed in an inner portion of the mirror visor and connected to the mirror and connected to the vehicle for fixing the mirror visor and the mirror to the vehicle body; an elastic hook provided at the mirror visor, which applies to the frame elastic force in a direction substantially orthogonal to a vehicle longitudinal direction of the vehicle; a rigid hook provided at the mirror visor in correspondence with the elastic hook, and which is rigid, which receives elastic force applied to the frame by the elastic hook; and a first impeding device provided at at least one of the mirror visor and the frame, which impedes relative movement, in the vehicle longitudinal direction, of the mirror visor and the frame without applying elastic force to the frame.

US 4 877 214 relates to a holding device of a mirror element for a rearview mirror, comprising: a mirror element having a mirror plate and a mirror holder supporting said mirror plate, said mirror holder having a central area, an aperture portion formed at said central area, and an undercut, said mirror element having an angle of incline that is adjustable; actuator unit means for adjusting said angle of incline of said mirror element; supporting means formed at said actuator unit means for tiltable supporting said mirror element; pivot means mounted on said actuator unit means by said supporting means and mounted separately on said aperture portion, said pivot means having a pivot plate with an upper portion and a lower portion; hook type latch means for engaging said mirror holder with said upper portion of said pivot plate; pawl engaging means for engaging said undercut of said mirror holder with said lower portion of said pivot plate; and said mirror holder being formed with a cutout for inserting a separating tool at a skirt of a peripheral edge thereof and with a contacting surface to be contacted with an end of said separating tool.

It is the object of this disclosure to further develop the known rearview device to overcome at least some of the stated problems above.

### SUMMARY

The object of the present disclosure is solved by the features of the characterizing portion of claim 1.

Preferred embodiments of the rearview device are described in claims 2 to 7.

With the present invention a rearview device, in particular in form of a mirror assembly, is provided. Such a rearview device comprises a cover, a bezel, at least one reflective element, and at least one light, indicator and/or camera module with a housing, wherein the cover is detachably attached via a fastening arrangement of the present disclosure.

The reflective element may be detachable from the bezel, and the at least one aperture may be accessible when the reflective element is detached.

It is also proposed that the at least one light, indicator and/or camera module comprises a side turn light module, and/or the cover is a mirror scalp.

Further, the present disclosure proposes that the housing has at least one first locking element and at least one second locking element.

Finally, the present disclosure provides a vehicle with at least one rearview device according to the present disclosure.

It should be noted that the features set out individually in the following description may be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the figures.

### DRAWINGS

In order that the disclosure may be well understood, there will now be described various forms thereof, given by way of example, reference being made to the accompanying drawings, in which:
- Fig. 1: illustrates a front perspective view of a rearview mirror assembly in accordance with aspects of the present disclosure;
- Fig. 2: illustrates a front perspective view of the rearview mirror assembly of Fig. 1, with a reflective element removed;
- Fig. 3: illustrates a rear perspective view of the rearview mirror assembly of Fig. 1, with the cover removed;
- Fig. 4A: illustrates rear perspective view of detail I of Fig. 3 in a first locked position;
- Fig. 4B: illustrates rear perspective view of detail I of Fig. 3 in a second deflected position;
- Fig. 5A: illustrates a cross-section B-B of Fig. 4A;
- Fig. 5B: illustrates a overlay view of cross-section B-B of Fig. 4A and cross-section C-C of Fig. 4B;
- Fig. 6: illustrates a front perspective view of a housing of a light module of a rearview mirror assembly in accordance with aspects of the present disclosure, with a first and a second locking elements;
- Fig. 7A: illustrates a front perspective view of the second locking element of detail II of Fig. 6;
- Fig. 7B: illustrates a rear perspective view of the second locking element shown in Fig. 7A;
- Fig. 8: illustrates cross-section A-A of Fig. 2;
- Fig. 9A: illustrates a first locking position of detail III of Fig. 8; and
- Fig. 9B: illustrates second deflected position of detail III of Fig. 8.

### DETAILED DESCRIPTION

The following description is merely exemplary in nature and is not intended to limit the present disclosure, application, or uses. It should be understood that throughout the drawings, corresponding reference numerals indicate like or corresponding parts and features.

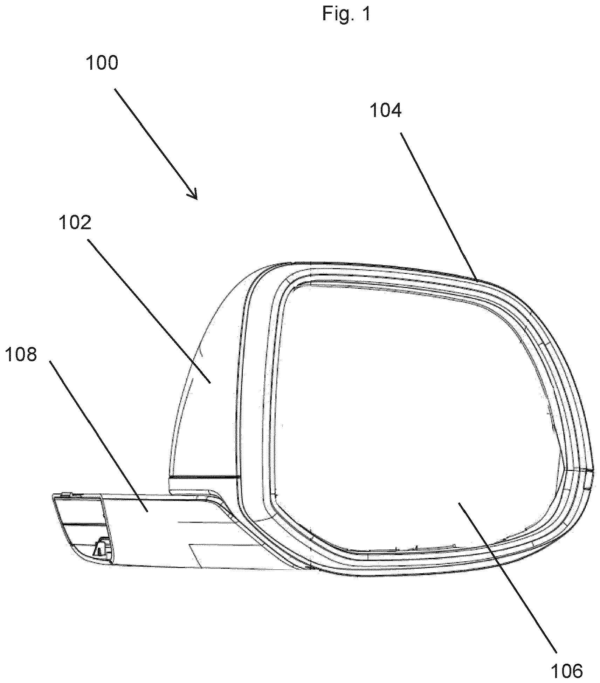

Fig. 1 illustrates a front perspective view of an exemplary rearview device of the present disclosure in the form of an exterior mirror assembly 100. The mirror assembly 100 includes a cover 102, a bezel 104, a reflective element 106 and a mounting arm 108. The mounting arm 108 is adapted to attach the mirror assembly to a vehicle (not shown). The cover 102 and the reflective element 106 are detachable for servicing.

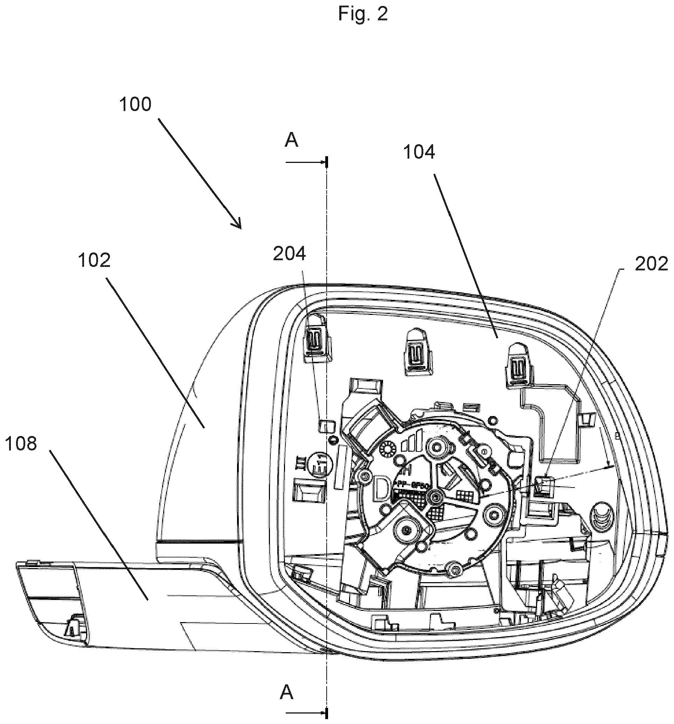

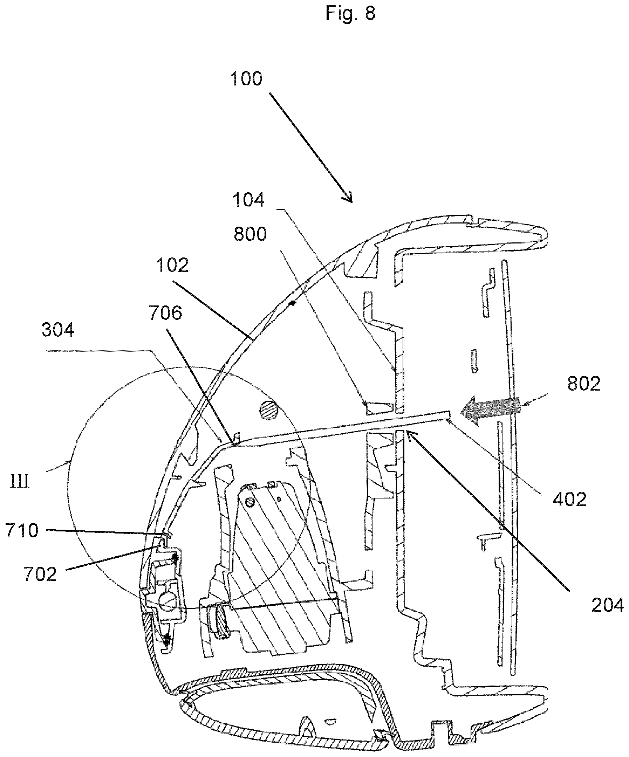

Fig. 2 illustrates a front perspective view of the mirror assembly 100 shown in Fig. 1 with the reflective element 106 removed. Removal of the reflective element 106 allows for access to a first aperture 202 and a second aperture 204. In this embodiment, the first aperture 202 and the second aperture 204 are located in the bezel 104 creating access to other elements of the mirror assembly 100 located behind the bezel 104. A section line A-A is depicted to define the placement for cross section A-A illustrated in Fig. 8.

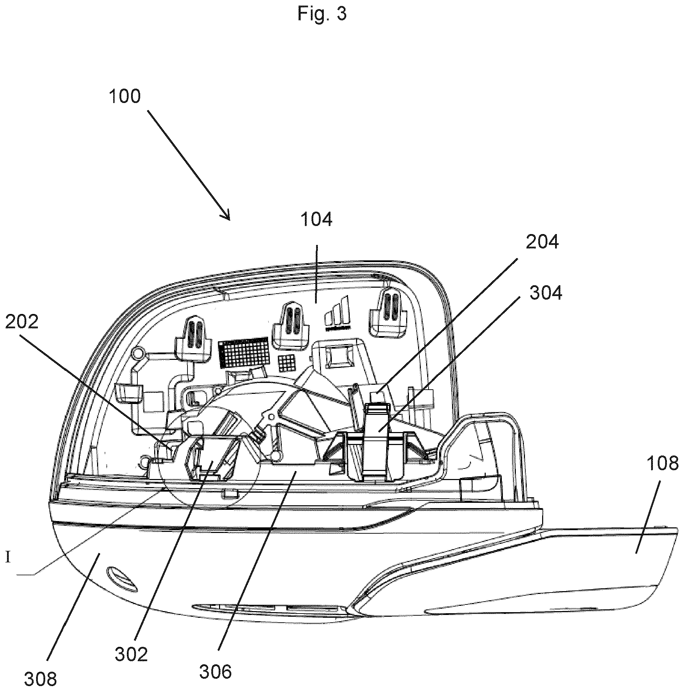

Fig. 3 illustrates a rear perspective view of the mirror assembly 100 of Fig. 1 with the cover 102 removed, showing that the first aperture 202 provides access to a first locking element 302 and the second aperture 204 provides access to a second locking element 304. In this embodiment, the first locking element 30 and the second locking element 304 are part of a housing 306. The first locking element 302 and the second locking element 304 may be integrally formed as part of the housing 306 or attached to the housing with a conventional fastener method such as screws or adhesive.

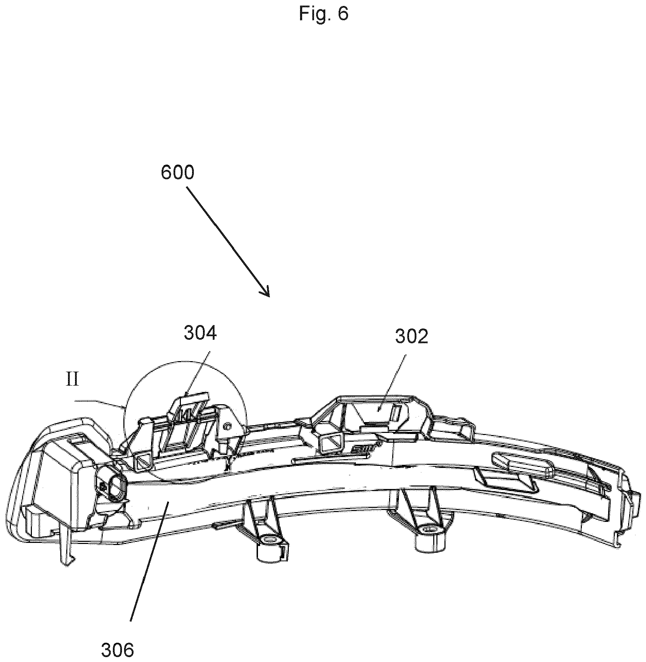

The housing 306, best illustrated in Fig. 6, in this embodiment is part of a side turn indicator module fastened to the mirror assembly 100. Specifically the housing 306 may be attached to a base 308 but may be attached to other mirror assembly components such as the bezel 104 or case frame (not shown). In another embodiments, the first locking element 302 and the second locking element 304 may also be part of the base 308.

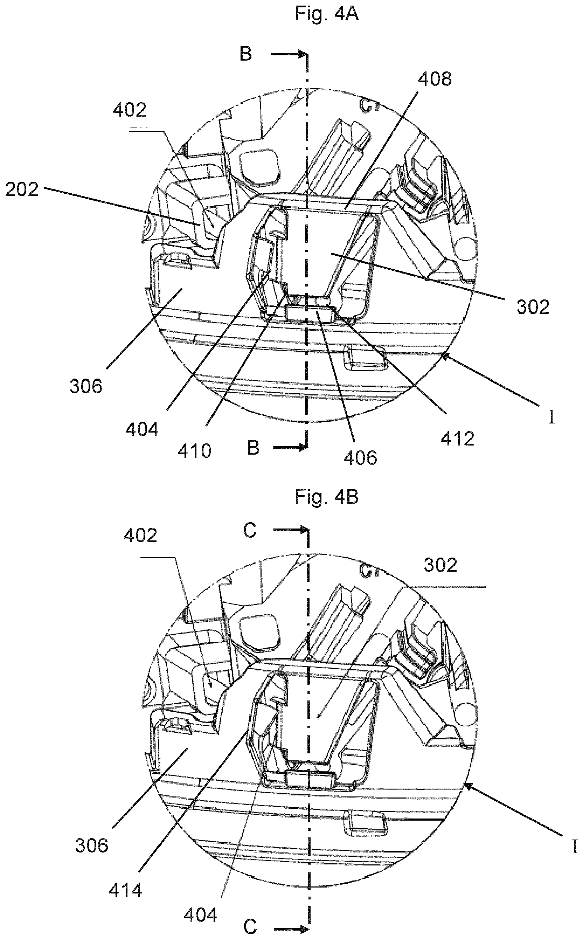

A detail I for use in Fig. 4A and 4B is defined around the first locking element 302. In detail, Fig. 4A illustrates a rear perspective view of a first position for the first locking element 302 and Fig. 4B illustrate a rear perspective view of a second position for the first locking element 302.

The first locking element 302 includes an actuation surface 404, a fulcrum 408 and a first locking element edge 410. The first locking element 302 is constructed from a material, which provides flexibility in rotating around the fulcrum 408 in response to a force 504 while retaining robustness over time. The fulcrum 408 provides a springback force that biases the first locking element edge 410 toward a first protrusion edge 412 of a first protrusion 406 which is defined as the first position.

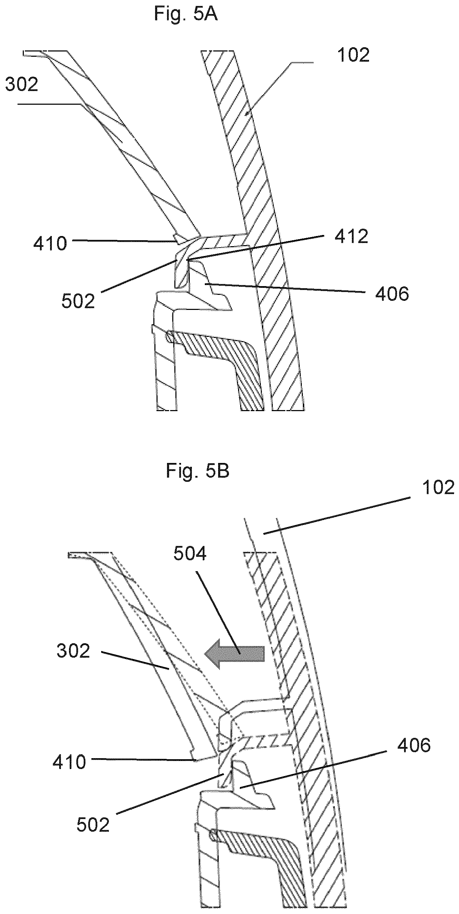

An actuation tool 402, such as a screwdriver or other similarly shaped tool, is inserted through the first aperture 202 to contact the actuation surface 404 of the first locking element 302 to apply the force 504, as best illustrated in Fig. 5B. The actuation surface 40 of the first locking element 302 is positioned to be aligned and cooperates with the first aperture 202 allowing the actuation tool 402 to make contact and transfer the force 504 to the actuation surface 404 of the first locking element 302. The fulcrum 408 enables the first locking element edge 410 to be displaced away from a first protrusion edge 412 of the first protrusion 406 in response to the force 504. The actuation surface 404 may also contain a lip (not shown) which may provide a stop for the actuation tool 402 when the actuation tool 402 is inserted at the proper position. This lip (not shown) may also provide support during the rotation of the actuation tool 402 to displace the first locking element edge 410.

Fig. 4A illustrates the actuation tool 402 contacting the actuation surface 404 when the first locking element 302 is in a first, locked position. A section line B-B is defined for the first locking element 302 in the first position. Illustrated in Fig. 4B, the actuation tool 402 is twisted or rotated between a first housing edge 414 and the actuation surface 404 to displace the first locking element 302 around the rotation fulcrum 408 to a second position. The second position is defined as a deflected position for the first locking element 302. In the deflected position, the first locking element edge 410 is displaced away from the first protrusion edge 412 of the first protrusion 406. A section line C-C for the first locking element 302 in the deflected position is defined in Fig. 4B.

Fig. 5A illustrates a cross-sectional view along the section line B-B from Fig. 4A. Cross-section B-B illustrates the first locking element 302 in the first position with the first locking element edge 410 retaining the cover 102. For that purpose, the cover 102 has a first retention element 502 assembled over the first protrusion 406. The springback force from the fulcrum 408 biases the first locking element edge 410 against the first retention element 502 and in contact with the first protrusion edge 41 of the first protrusion 406. The cover 102 is removeably secured to the mirror assembly 100 by the cooperation between the first locking element 302, the first protrusion 406 and the first retention element 502.

Fig. 5B illustrates a cross section C-C overlaid cross section B-B. Thus, Fig. 5B illustrates the movement of the first locking element 302 as the actuation tool 402 is twisted to displace the first locking element 302. That is, the first locking element 30 and the cover 102 in the first, locked position is shown with cross-hatching while the second, deflected position is illustrated without cross-hatching. As the actuation tool 402 is twisted against the actuation surface 404, the respective force 504 rotates the first locking element 302 about the rotation fulcrum 408. This allows the first locking element edge 410 to be displaced away from the first protrusion edge 412. Once the first locking element edge 410 has been displaced a defined distance, the cover 102 may then be lifted by an upward force to remove the first retention element 502 from the first protrusion 406. This allows the cover 102 to be removed for replacement or to provide access to the interior of the mirror assembly 100 for servicing.

The distance the first locking element edge 410 is displaced from the first protrusion edge 412 is dependent on the size of the first retention element 502. In the shown embodiment, this distance is between 1.3 mm and 1.9 mm, preferably 1.5 mm. In other variations this distance may be greater or lesser dependent on design considerations.

To install the cover 102, the first locking element edge 410 of the first locking member 302 is displaced by the first retention element 502 as the cover 102 is assembled over the first protrusion 406. Once the first retention element 502 has been seated onto the first protrusion 40, the springback force from the fulcrum 408 biases the first locking element edge 410 toward the first protrusion 406 which allows it to return to a first, locked position. This locked position exerts a force to retain the first retention element 502 against the first protrusion 406.

Fig. 6 illustrates a front perspective view of the housing 306 as part of a light module 60. The first locking element 302 is shown in relation to the second locking element 304. The light module 600 is coupled to the mirror assembly 100, as shown in Fig. 1. In this embodiment, a plastic material such as an Acrylonitrile Butadiene Styrene (ABS) material is used to construct the housing 306, the first locking element 302, the second locking element 304. In other variations different materials may be used for the housing 306, the first locking element 302 and/or the second locking element 304.

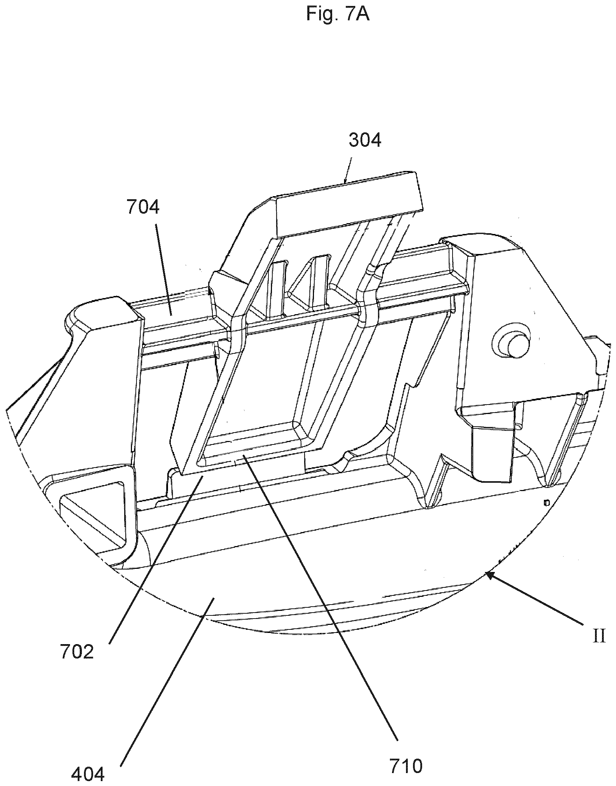

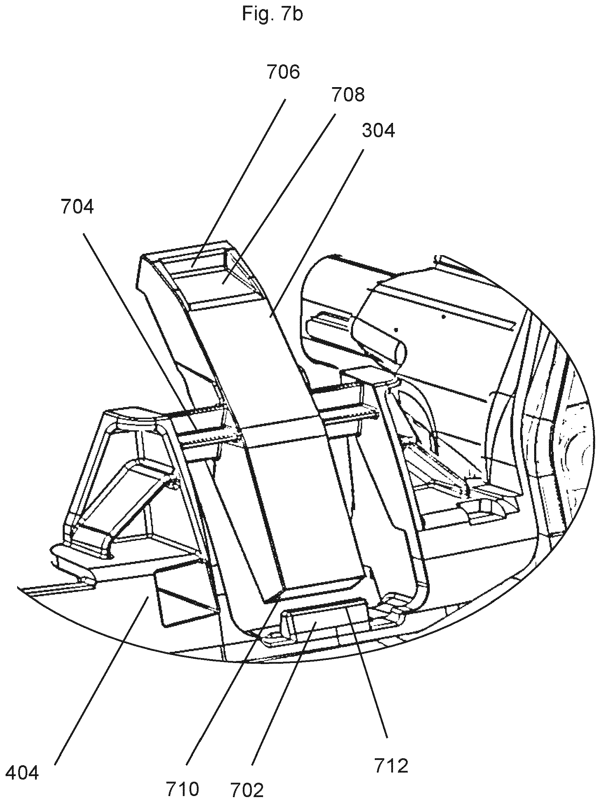

A detail view II of Fig. 6 illustrates an enlarged view of the second locking element 304 shown in Fig. 7A and 7B, from two sides thereof.

Fig. 7A illustrates a front perspective view of the detail II for the second locking element 304. The second locking element 304 includes a rotation fulcrum 704. The second locking element 304 is able to pivot around the fulcrum 704 when a force is applied to the second locking element 304. The fulcrum 704 has an elastic springback characteristic designed to bias the second locking element 304 toward a second protrusion 702. In this embodiment, the fulcrum 704 has an X-shaped geometry to allow for ease of manufacturing, ease of flexing, and minimization of the cross-sectional area. The springback characteristic may be adjusted by material selection and/or the design shape of the fulcrum 704. The rotational fulcrum 704 is designed to allow a second locking element edge 710 of the second locking element 304 to be rotated away from the second protrusion 702 repeatedly. This ensures that the second locking element 304 is reusable in a service situation.

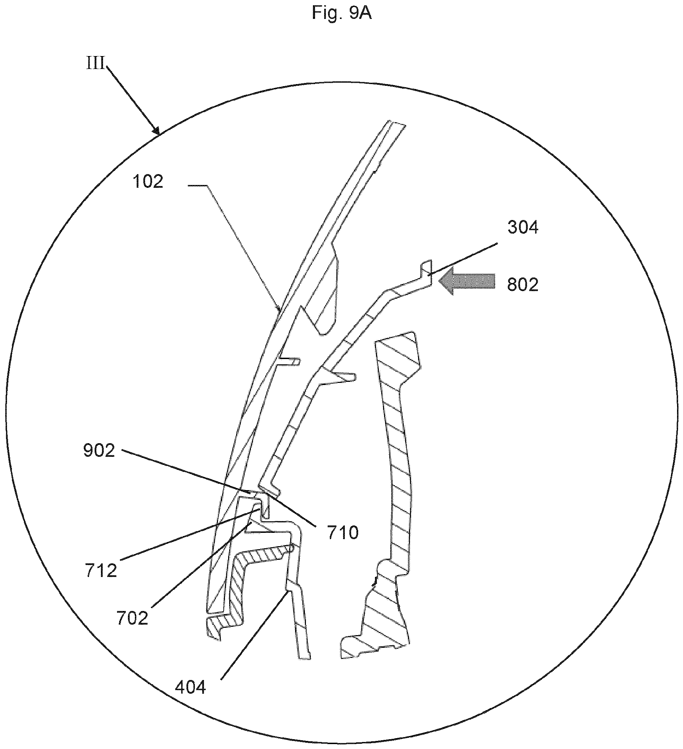

Fig. 7B illustrates a rear perspective view the second locking element 304 shown in Fig. 7A. The second locking element 304 includes an actuation surface 706, a guiding cavity 708 and the second locking element edge 710. The guiding cavity 708 is used to guide the actuation tool 402, as illustrated in Fig. 8, as it is inserted through the second aperture 204 to contact the actuation surface 706. The guiding cavity 708 may also include a lip (not shown) which retains the actuation tool 402 in the guiding cavity 708. In Fig. 7B, a second protrusion edge 712 is shown as being defined for the second protrusion 702 which cooperates with the second locking element edge 710 for retaining the cover 102, as best illustrated in Fig. 9A.

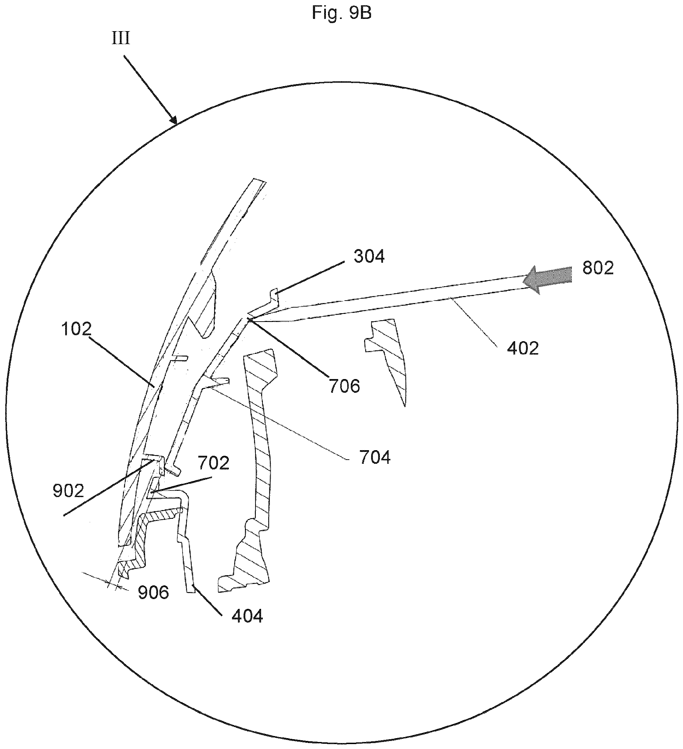

Fig. 8 illustrates the cross-sectional view along section line A-A of Fig. 1. In cross-section A-A, the second locking element 304 is shown in relation to the cover 102. A frame 800 provides clearance for the actuation tool 402. The actuation tool 402 is shown inserted through the second aperture 204 and guided by the guiding cavity 708 to contact the actuation surface 706. Once the actuation tool 402 contacts the actuation surface 706, a force 802 is applied against the actuation surface 706 to pivot the second locking element 304 about the fulcrum 704. The actuation surface 706 moves toward the cover 102 while the second locking element edge 710 rotates away from the cover 102. A circle III is defined for an enlarged view of the second locking element 304 in Fig. 9A and Fig. 9B.

Fig. 9A illustrates detail III of Fig. 8 for cross-section A-A where the second locking element 304 is shown in a first, locked position. In this position, a second retention element 902 of the cover 102 is positioned over the second protrusion 702. The second locking element 304 is biased around the fulcrum 704, as illustrated in Fig. 7B, toward the second protrusion 702 due to the springback characteristic of the fulcrum 704. This bias force retains the second retention element 902 between the second locking element edge 710 and the second protrusion edge 712 securing the cover 304 at the second retention element 902.

Fig. 9B illustrates a second, deflected position for the second locking element 304 from detail III of Fig. 8. In this view, the force 802 from the actuation tool 402 is applied to the second locking element 304. The force 802 causes the second locking element 304 to rotate around the fulcrum 704 resulting in releasing the bias force applied by the second retention element 902 against the second protrusion 702. As the second locking element 304 is rotated around the fulcrum 704, a distance 906 is created between the second locking element 304 and the second protrusion 702. The distance 906 provides clearance for the cover 102 to be lifted off the second protrusion 702 and removed from the mirror assembly 100 for replacement or service. The distance 906 is dependent on the thickness of the cover 102 and surrounding parts for clearance. In this embodiment, the distance 906 is between 1.3 mm and 1.9 mm, preferably 1.5 mm. In other variations, the distance 906 may be greater or lesser than this to align with design constraints.

It will be understood in this disclosure that at least one locking element 302, 304 is used to retain the cover 102 to the mirror assembly 100. There may be at least one first locking element 302, at least one second locking element 304, or a combination of at least one first locking element 302 and at least one second locking element 304 to retain the cover 102 to the mirror assembly 100.

### REFERENCE SIGN LIST

- 100: - Mirror Assembly
- 102: - Cover
- 104: - Bezel
- 106: - Reflective Element
- 108: - Mounting Arm
- 202: - First Aperture
- 204: - Second Aperture
- 302: - First Locking Element
- 304: - Second Locking Element
- 306: - Housing
- 308: - Base
- 402: - Actuation Tool
- 404: - Actuation surface
- 406: - First Protrusion
- 408: - Rotation Fulcrum
- 410: - First Locking Element Edge
- 412: - First Protrusion Edge
- 414: - Housing Edge
- 502: - Retention Element
- 504: - Force
- 600: - Light Module
- 702: - Second Protrusion
- 704: - Fulcrum
- 706: - Actuation Surface
- 708: - Guiding Cavity
- 710: - Second Locking Element Edge

- 712: - Second Protrusion Edge
- 800: - Frame
- 802: - Force
- 902: - Second Retention Element
- 906: - Distance

- A-A: - Section Line
- B-B: - Section Line
- C-C: - Section Line
- I: - Detail View of First Locking Element
- II: - Detail View of Second Locking Element
- III: - Detail Sectional View of Second Locking Element

## Claims

1. A rearview device, in particular in form of a mirror assembly (100), comprising a cover (102), a bezel (104), at least one reflective element (106), and at least one light, indicator and/or camera module with a housing (306), wherein the cover (102) is detachably attached via a fastening arrangement, the fastening arrangement comprising:
at least one locking element (302, 304) and at least one protrusion (406, 702);
at least one retention element (502, 902) detachably restrained between the at least one protrusion (406, 702) and the at least one locking element (302, 304); and
at least one aperture (202, 204) for accessing the at least one locking element (302, 304),
such that the at least one locking element (302, 304) is displaced by applying a force via an actuation tool (402) inserted through the at least one aperture (202, 204) and twisted,
wherein the at least one locking element (302, 304) has an actuation surface (404, 706), such that the force (504, 802) applied on the actuation surface (404, 706) displaces the at least one locking element (302, 304),
wherein each locking element (302, 304) is flexible,
wherein each locking element (302, 304) rotates about a fulcrum (408, 704) when the force (504, 802) is applied, and
wherein the fulcrum (408, 704) of each locking element (302, 304) provides a springback force biasing a locking element edge (410, 710) towards a protrusion edge (412, 712),
**characterized in that**
the at least one locking element (302, 304) and the at least one protrusion (406, 702) are provided by the housing of the light, indicator and/or camera module, the at least one retention element (502, 902) is provided by the cover (102),
the at least one aperture (202, 204) is provided by the bezel (104), which cooperates with the cover (102), and
the at least one locking element (302, 304) is deflected by a distance (906) of 1.3 mm to 1.9 mm from the protrusion (406, 702) when the force (504, 802) is applied.

2. The rearview device of claim 1, wherein
the actuation surface (404, 706) provides a stop for the actuation tool (402), in particular in form of a lip.

3. The rearview device of claim 1 or 2, wherein
a guiding cavity (708) of the locking element (304) is provided such that the actuation tool (402) is guided in the guiding cavity (708).

4. The rearview device of any one of the preceding claims, wherein
the at least one locking element (302, 304) rotates about the fulcrum (408, 704) when the force (504, 802) is applied, to the actuation surface (404, 706) by the actuation tool (402).

5. The rearview device of any one of the preceding claims, wherein
there are two locking elements (302, 304).

6. The rearview device of any one of the preceding claims, wherein
the reflective element (106) is detachable from the bezel (104), and
the at least one aperture (202, 204) is accessible when the reflective element (106) is detached.

7. The rearview device of any one of the preceding claims, wherein
the at least one light, indicator and/or camera module comprises a side turn light module, and/or
the cover (102) is a mirror scalp.

8. The rearview device of any one of the preceding claims, wherein
the housing has at least one first locking element (302) and at least one second locking element (304).

9. A vehicle with at least one rearview device of any one of the preceding claims.

## Patentansprüche

1. Rückblickvorrichtung, insbesondere in Form einer Spiegelbaugruppe (100), umfassend eine Abdeckung (102), eine Einfassung (104), mindestens ein reflektierendes Element (106) und mindestens ein Licht-, Blinker- und/oder Kameramodul mit einem Gehäuse (306), wobei die Abdeckung (102) über eine Befestigungsanordnung lösbar befestigt ist, wobei die Befestigungsanordnung umfasst:
mindestens ein Verriegelungselement (302, 304) und mindestens einen Vorsprung (406, 702);
mindestens ein Halterungselement (502, 902), das lösbar zwischen dem mindestens einen Vorsprung (406, 702) und dem mindestens einen Verriegelungselement (302, 304) gehalten ist; und
mindestens eine Öffnung (202, 204) zum Zugreifen auf das mindestens eine Verriegelungselement (302, 304) derart, dass das mindestens eine Verriegelungselement (302, 304) durch Anwenden einer Kraft über ein Betätigungswerkzeug (402), das durch die mindestens eine Öffnung (202, 204) eingeführt und gedreht wird, verschoben wird, wobei das mindestens eine Verriegelungselement (302, 304) eine Betätigungsfläche (404, 706) aufweist, sodass die Kraft (504, 802), die auf die Betätigungsfläche (404, 706) angewendet wird, das mindestens eine Verriegelungselement (302, 304) verschiebt,
wobei jedes Verriegelungselement (302, 304) flexibel ist,
wobei jedes Verriegelungselement (302, 304) sich um einen Drehpunkt (408, 704) dreht, wenn die Kraft (504, 802) angewendet wird, und
wobei der Drehpunkt (408, 704) von jedem Verriegelungselement (302, 304) eine Rückfederungskraft bereitstellt, die eine Verriegelungselementkante (410, 710) zu einer Vorsprungkante (412, 712) vorspannt,
**dadurch gekennzeichnet, dass**
das mindestens eine Verriegelungselement (302, 304) und der mindestens eine Vorsprung (406, 702) durch das Gehäuse des Licht-, Blinker- und/oder Kameramoduls bereitgestellt ist,
das mindestens eine Halterungselement (502, 902) von der Abdeckung (102) bereitgestellt ist,
die mindestens eine Öffnung (202, 204) durch die Einfassung (104), die mit der Abdeckung (102) zusammenwirkt, bereitgestellt ist und
das mindestens eine Verriegelungselement (302, 304) um einen Abstand (906) von 1,3 mm bis 1,9 mm von dem Vorsprung (406, 702) umgelenkt wird, wenn die Kraft (504, 802) angewendet wird.

2. Rückblickvorrichtung nach Anspruch 1, wobei
die Betätigungsfläche (404, 706) einen Stopper für das Betätigungswerkzeug (402), insbesondere in Form einer Lippe, bereitstellt.

3. Rückblickvorrichtung nach Anspruch 1 oder 2, wobei
ein Führungshohlraum (708) des Verriegelungselements (304) derart bereitgestellt ist, dass das Betätigungswerkzeug (402) in dem Führungshohlraum (708) geführt ist.

4. Rückblickvorrichtung nach einem der vorangehenden Ansprüche, wobei
das mindestens eine Verriegelungselement (302, 304) sich um den Drehpunkt (408, 704) dreht, wenn die Kraft (504, 802) durch das Betätigungswerkzeug (402) auf die Betätigungsfläche (404, 706) angewendet wird.

5. Rückblickvorrichtung nach einem der vorangehenden Ansprüche, wobei es zwei Verriegelungselemente (302, 304) gibt.

6. Rückblickvorrichtung nach einem der vorangehenden Ansprüche, wobei
das reflektierende Element (106) von der Einfassung (104) lösbar ist und
die mindestens eine Öffnung (202, 204) zugänglich ist, wenn das reflektierende Element (106) gelöst ist.

7. Rückblickvorrichtung nach einem der vorangehenden Ansprüche, wobei
das mindestens eine Licht-, Blinker- und/oder Kameramodul ein Seitenblinklichtmodul umfasst und/oder
die Abdeckung (102) ein Spiegelbezug ist.

8. Rückblickvorrichtung nach einem der vorangehenden Ansprüche, wobei
das Gehäuse mindestens ein erstes Verriegelungselement (302) und mindestens ein zweites Verriegelungselement (304) aufweist.

9. Fahrzeug mit mindestens einer Rückblickvorrichtung nach einem der vorangehenden Ansprüche.

## Revendications

1. Dispositif de rétroviseur, en particulier sous la forme d'un ensemble de miroir (100), comprenant un couvercle (102), une lunette (104), au moins un élément réfléchissant (106) et au moins un module lumineux, d'indicateur et/ou de caméra avec un boîtier (306), dans lequel le couvercle (102) est fixé de manière détachable par le biais d'un agencement de fixation, l'agencement de fixation comprenant :
au moins un élément de verrouillage (302, 304) et au moins une saillie (406, 702) ;
au moins un élément de retenue (502, 902) retenu de manière détachable entre l'au moins une saillie (406, 702) et l'au moins un élément de verrouillage (302, 304) ; et
au moins une ouverture (202, 204) pour accéder à l'au moins un élément de verrouillage (302, 304),
de telle sorte que l'au moins un élément de verrouillage (302, 304) soit déplacé en appliquant une force par le biais d'un outil d'actionnement (402) inséré à travers l'au moins une ouverture (202, 204) et tourné,
dans lequel l'au moins un élément de verrouillage (302, 304) présente une surface d'actionnement (404, 706), de telle sorte que la force (504, 802) appliquée sur la surface d'actionnement (404, 706) déplace l'au moins un élément de verrouillage (302, 304),
dans lequel chaque élément de verrouillage (302, 304) est flexible,
dans lequel chaque élément de verrouillage (302, 304) tourne autour d'un point d'appui (408, 704) lorsque la force (504, 802) est appliquée, et
dans lequel le point d'appui (408, 704) de chaque élément de verrouillage (302, 304) fournit une force de rappel élastique sollicitant un bord d'élément de verrouillage (410, 710) vers un bord de saillie (412, 712),
**caractérisé en ce que**
l'au moins un élément de verrouillage (302, 304) et l'au moins une saillie (406, 702) sont fournies par le boîtier du module lumineux, d'indicateur et/ou de caméra,
l'au moins un élément de retenue (502, 902) est fourni par le couvercle (102),
l'au moins une ouverture (202, 204) est fournie par la lunette (104), laquelle coopère avec le couvercle (102), et
l'au moins un élément de verrouillage (302, 304) est dévié d'une distance (906) de 1,3 mm à 1,9 mm à partir de la saillie (406, 702) lorsque la force (504, 802) est appliquée.

2. Dispositif de rétroviseur selon la revendication 1, dans lequel
la surface d'actionnement (404, 706) fournit un arrêt pour l'outil d'actionnement (402), en particulier sous la forme d'un rebord.

3. Dispositif de rétroviseur selon la revendication 1 ou 2, dans lequel
une cavité de guidage (708) de l'élément de verrouillage (304) est fournie de telle sorte que l'outil d'actionnement (402) soit guidé dans la cavité de guidage (708).

4. Dispositif de rétroviseur selon une quelconque des revendications précédentes, dans lequel
l'au moins un élément de verrouillage (302, 304) tourne autour du point d'appui (408, 704) lorsque la force (504, 802) est appliquée sur la surface d'actionnement (404, 706) par l'outil d'actionnement (402).

5. Dispositif de rétroviseur selon une quelconque des revendications précédentes, dans lequel il y a deux éléments de verrouillage (302, 304).

6. Dispositif de rétroviseur selon une quelconque des revendications précédentes, dans lequel
l'élément réfléchissant (106) peut être détaché de la lunette (104), et
l'au moins une ouverture (202, 204) est accessible lorsque l'élément réfléchissant (106) est détaché.

7. Dispositif de rétroviseur selon une quelconque des revendications précédentes, dans lequel
l'au moins un module lumineux, d'indicateur et/ou de caméra comprend un module lumineux de clignotant, et/ou
le couvercle (102) est une coiffe de miroir.

8. Dispositif de rétroviseur selon une quelconque des revendications précédentes, dans lequel
le boîtier présente au moins un premier élément de verrouillage (302) et au moins un second élément de verrouillage (304).

9. Véhicule avec au moins un dispositif de rétroviseur selon une quelconque des revendications précédentes.
